# EUROPEAN PATENT APPLICATION

(11) **EP 4 507 168 A1**
(43) Date of publication of application: **12.02.2025**
(21) Application number: 22809631.9
(22) Date of filing: 01.04.2022
(51) Int. Cl.: H02K 1/22

(54) **INTERIOR PERMANENT MAGNET ROTOR AND ROTATING ELECTRIC MACHINE**

(71) Applicant: KABUSHIKI KAISHA TOSHIBA, Minato-ku Tokyo 105-0023 (JP); Toshiba Infrastructure Systems & Solutions Corporation, Kawasaki-shi, Kanagawa 212-8585 (JP)
(72) Inventor: MATSUBARA Masakatsu, Kawasaki-shi Kanagawa 2128585 (JP); KANO Masaru, Kawasaki-shi Kanagawa 2128585 (JP); YAMAGISHI Daisuke, Kawasaki-shi Kanagawa 2128585 (JP); SASAKI Naoya, Kawasaki-shi Kanagawa 2128585 (JP)
(74) Representative: AWA Sweden AB
(86) International application number: PCT/JP2022/016987
(87) International publication number: WO 2023/188423

(57) **Abstract**

According to an embodiment, an embedded magnet rotor (100) comprises a rotor shaft, a rotor core (120), permanent magnets (130) and two end plates. The rotor core (120) has electromagnetic steel sheets (120a) laminated axially, and two permanent magnet housing holes (121) formed in a radially outer portion of the rotor core (120) and arranged in a V-shape across each d axis with a circumferential interval. Each end plate has smaller outside diameter than the rotor core (120) and is arranged at axial end to prevent the permanent magnets (130) from protruding axial outward. The permanent magnet housing holes (121) communicate with an outer side of an outer peripheral surface of the rotor core (120). The electromagnetic steel sheets in regions axially near the end plates of the rotor core (120) have connection portions (125) for connecting the electromagnetic steel sheets mutually.

## Description

### FIELD

The present invention relates to an embedded magnet rotor and a rotary electric machine including the same.

### BACKGROUND

A rotary electric machine includes: a rotor having a rotor shaft and a rotor core; and a stator provided on the radially outer side of the rotor core.

The stator has: a stator winding being a high-voltage portion wound around stator teeth formed in a stator core. The stator winding has: portions passing through the stator core and housed in stator slots; and coil end portions protruding axially outward from the axial ends of the stator core and connected to each other.

In the embedded magnet rotor, permanent magnets are housed in through holes formed in regions near a radially outer side in the rotor core and extending in the axial direction. The rotor core typically has a plurality of electromagnetic steel sheets laminated in the axial direction. On the axial ends of the lamination of the electromagnetic steel sheets, end plates are provided to prevent the axially outward protrusion of the permanent magnets.

The end plates are at positions near the coil end portions of the high-pressure stator winding and thus in view of insulation, need to have a sufficient insulation distance from, that is, need to be sufficiently apart from the stator end structures. Therefore, in view of electric insulation, the end plates preferably have as small a diameter as possible. Because of this, the end plates are typically smaller in diameter than the rotor core.

In many cases, top bridges which are part of the rotor core are present between the permanent magnet housing through holes and the outer surface of the rotor core to strengthen the structure of the rotor core. The top bridges serve as paths of magnetic flux, that is, magnetic paths. The magnetic fluxes that pass through the magnetic paths become leakage flux that stay only inside the rotor and are not linked with the stator side, leading to lower torque efficiency of the rotary electric machine. With this as a background, there are cases where a top bridgeless rotor is used. The top bridgeless rotor is of a type having no top bridges and having the permanent magnet housing spaces communicate with a space outside the rotor core (a gap space between the rotor and the stator), thereby reducing the leakage fluxes.

### PRIOR ART DOCUMENT

### PATENT DOCUMENT

Patent Document 1: Japanese Patent No. 5447418

### SUMMARY OF THE INVENTION

### PROBLEMS TO BE SOLVED BY THE INVENTION

In the aforesaid top bridgeless embedded magnet rotor as well, the end plates are typically smaller in diameter than the rotor core. That is, the radially outer end of the rotor core is on a more radially outer side than the radially outer ends of the end plates.

This structure has a problem that especially in regions near the axial-direction ends of the rotor core, the electromagnetic steel sheets are deformed at their portions on a more radially outer side than the end plates by a force due to a centrifugal force applied to the permanent magnets and a wind pressure due to the rotation of the rotor, which may lead to the breakage of the rotor.

An object of the present invention is to provide an embedded magnet rotor and a rotary electric machine in which the deformation of end portions of electromagnetic steel sheets forming a rotor core is prevented.

According to the present invention, there is provided an embedded magnet rotor comprising: a rotor shaft extending in a rotation axis direction; a rotor core having a plurality of electromagnetic steel sheets laminated in the rotation axis direction attached to a radially outer side of the rotor shaft, the rotor core having two permanent magnet housing holes that are formed in a radially outer portion of the rotor core and are arranged in a V-shape across each d axis with an interval in a circumferential direction; plate-shaped permanent magnets respectively housed in the permanent magnet housing holes; and two end plates smaller in outside diameter than the rotor core and arranged at ends of the plurality of electromagnetic steel sheets in terms of the rotation axis direction to prevent the permanent magnets from protruding outward in terms of the rotation axis direction, wherein the permanent magnet housing holes communicate with an outer side of an outer peripheral surface of the rotor core, and wherein the plurality of electromagnetic steel sheets in regions near the end plates in terms of the rotation axis direction of the rotor core have connection portions for connecting the electromagnetic steel sheets.

### BRIEF DESCRIPTION OF THE DRAWINGS

FIG. 1 is a cross-sectional view illustrating the structure of a rotary electric machine according to a first embodiment.
FIG. 2 is a sectional longitudinal view illustrating the structure of the rotary electric machine according to the first embodiment.
FIG. 3 is a partial cross-sectional view illustrating an inter-pole portion of the embedded magnet rotor according to the first embodiment.
FIG. 4 is a partial cross-sectional view illustrating an example of a conventional embedded magnet rotor for explaining the effect of the embedded magnet rotor according to the first embodiment.
FIG. 5 is a partial cross-sectional view illustrating the structure of an inter-pole portion of an embedded magnet rotor according to a second embodiment.
FIG. 6 is a partial cross-sectional view illustrating the structure of an inter-pole portion of an embedded magnet rotor according to a third embodiment.
FIG. 7 is a cross-sectional view illustrating the structure of a rotary electric machine according to a fourth embodiment.

### DETAILED DESCRIPTION

Hereinafter, with reference to the accompanying drawings, embodiments of an embedded magnet rotor and a rotary electric machine of the present invention will be described. The same or similar portions are represented by the same reference symbols, and a duplicate description will be omitted.

### [First Embodiment]

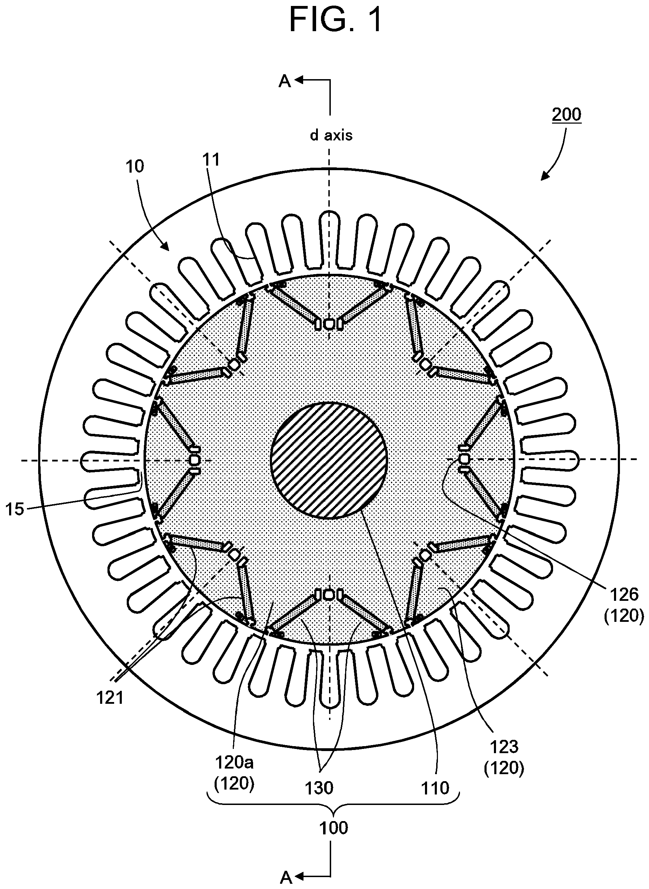

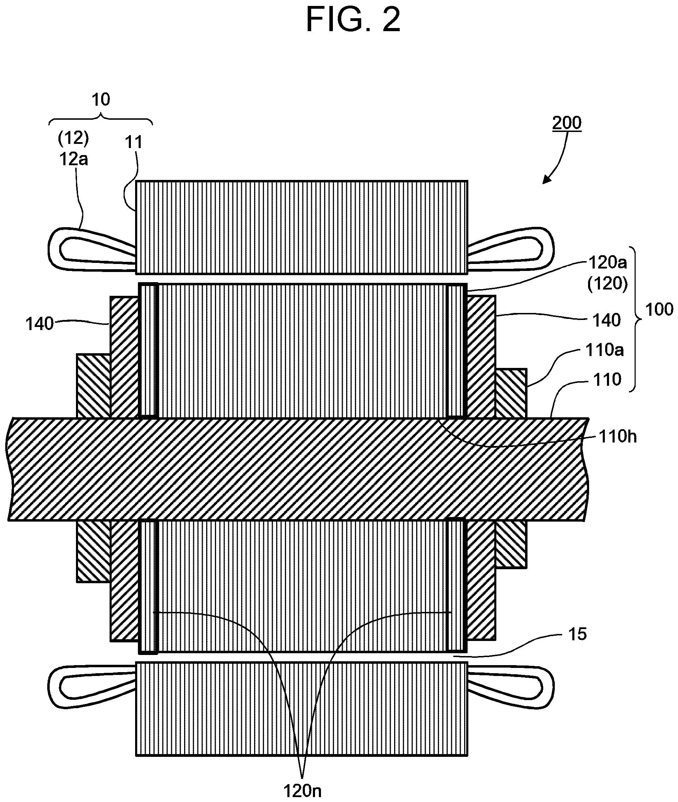

FIG. 1 is a cross-sectional view illustrating the structure of a rotary electric machine 200 according to a first embodiment. FIG. 2 is a sectional longitudinal view illustrating the structure of the rotary electric machine 200 according to the first embodiment.

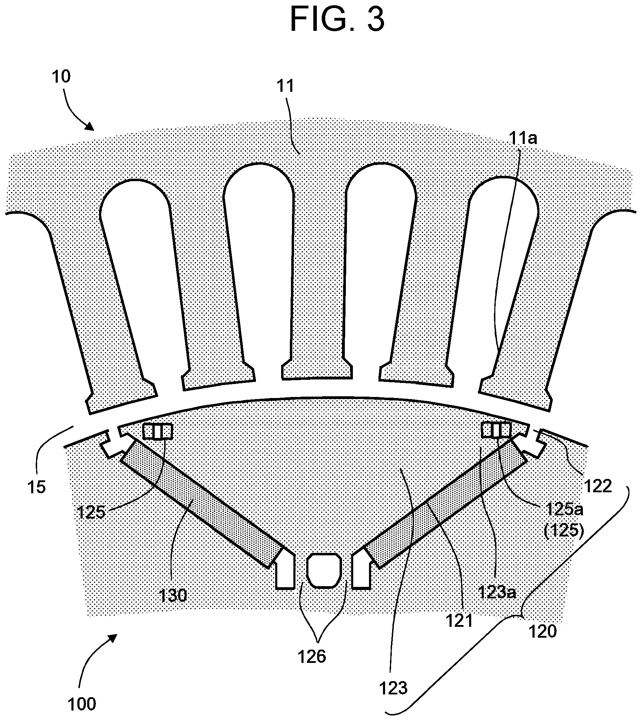

The rotary electric machine 200 includes: an embedded magnet rotor 100 having a rotor shaft 110 extending in the rotation axis direction, a rotor core 120 attached to the rotor shaft 110, and a plurality of permanent magnets 130 (refer to FIG. 3); a stator 10 disposed on the radially outer side of the rotor core 120 to surround the rotor core 120 via a gap space 15 and having a cylindrical stator core 11 where stator teeth 11a are formed; and two bearings (not illustrated) by which the rotor shaft 110 is rotatably supported.

The rotor core 120 has a plurality of electromagnetic steel sheets 120a laminated in the rotation axis direction. The electromagnetic steel sheets 120a each have a punched portion where the rotor shaft 110 is to penetrate and punched portions where the permanent magnets 130 are to penetrate. In the state in which the electromagnetic steel sheets 120a are laminated, these punched portions form, in the rotor core 120, a rotor shaft through hole 110h (FIG. 2) and a plurality of permanent magnet housing holes 121 (FIG. 1) which both extend in the rotation axis direction.

Two permanent magnet housing holes 121 are arranged across each axis d and each center bridge 126, in a V-shape projecting radially inward. Note that though FIG. 1 illustrates, as an example, the case where there is only one layer of the V-shaped arrangement in the radial direction, this is not restrictive and the V-shaped arrangement may be formed in a plurality of layers in the radial direction.

The permanent magnets 130 are plate-shaped. Though FIG. 1 illustrates, as an example, the case where the permanent magnets 130 are flat plate-shaped, the permanent magnets 130 may have, for example, a curved shape in its cross section perpendicular to the rotation axis of the rotor shaft 110 (vertical cross section).

On the rotation axis-direction ends of the rotor core 120, two end plates 140 are provided to prevent the permanent magnets 130 from protruding from the rotor core 120 outward in terms of the rotation axis direction. The end plates 140 are smaller in outside diameter than the rotor core 120 because of reasons such as that they only need to cover a range where the permanent magnets 130 are arranged in the vertical cross section and they need to have as large an insulation distance as possible from later-described coil end portions 12a to which a high voltage is applied. Further, the end plates 140 are larger in outside diameter than a radially outermost envelope cylinder of the permanent magnets 130 housed in the rotor core 120.

Regions close to the end plates 140 in the rotor core 120 is to be called end plate neighboring regions 120n (FIG. 2). Here, the end plate neighboring regions 120n are ranges of the electromagnetic steel sheets 120a wherein the deformation of radially outer portions of the electromagnetic steel sheets 120a and the breakage of the rotor are conventionally likely to occur because the end plates 140 are smaller in outside diameter than the rotor core 120.

On the inner peripheral side of the stator 10, the plurality of stator teeth 11 for a stator winding 12 (FIG. 2) are formed with intervals in the circumferential direction. The stator winding 12 has the coil end portions 12a extending from the ends of the stator core 11 outward in terms of the rotation axis direction.

FIG. 3 is a partial cross-sectional view illustrating the structure of an inter-pole portion of the embedded magnet rotor 100 according to the first embodiment.

The permanent magnet housing holes 121 at adjacent poles sandwich the d axis and the center bridge 126 and are more apart from each other as they go radially outward. Therefore, in the rotor core 120, portions sandwiched by the permanent magnet housing holes 121 in the circumferential direction each form a fan-shaped portion 123 enlarged in the circumferential direction toward radially outward from the center bridge 126.

The plurality of electromagnetic steel sheets 120a in the end plate neighboring regions 120n of the rotor core 120 each have connection portions 125 formed in fan-shaped portion end regions 123a of the fan-shaped portions 123.

The fan-shaped portion end regions 123a here refer to portions, in the fan-shaped portions 123, on a more radially outer side than the end plate 140 and to regions near the circumferential ends of the fan-shaped portions 123.

In this embodiment, the connection portions 125 are caulked portions 125a. For example, as illustrated in FIG. 3, holes are formed in electromagnetic steel sheets 120a close to the end plates 140 out of the plurality of electromagnetic steel sheets 120a, electromagnetic steel sheets 120a far from the end plates 140 are partly bent outward, and the plurality of electromagnetic steel sheets 120a are bent. For example, the connection portions 125 may be formed in a unit of a group of several sheets to about ten sheets. Instead, such a group of the electromagnetic steel sheets 120a may be provided in plurality in the rotation axis direction. Instead, all the electromagnetic steel sheets 120a may be formed as a similar group.

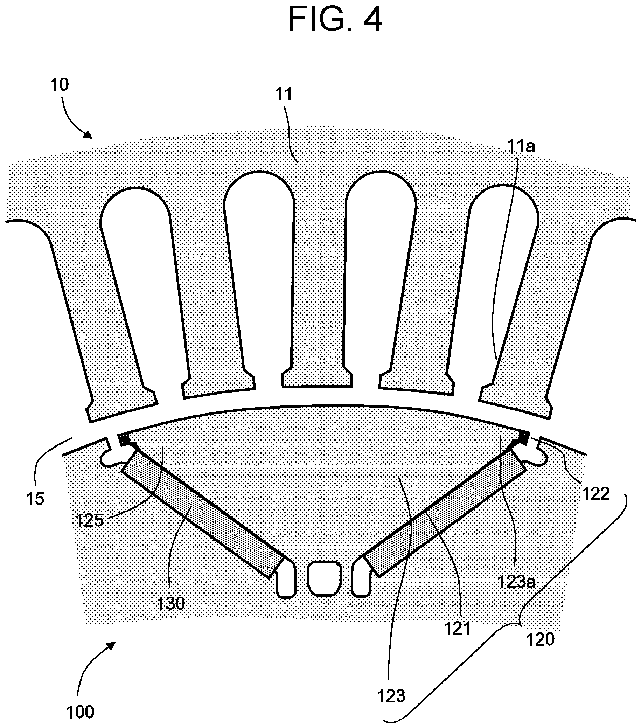

FIG.4 is a partial cross-sectional view illustrating an example of a conventional embedded magnet rotor for explaining the effect of the embedded magnet rotor according to the first embodiment.

In the conventional example, the electromagnetic steel sheets 120a in the end plate neighboring regions 120n undergo the deformation, curling, or the like at their portions in the fan-shaped portion end regions 123a, due to a force applied to the fan-shaped portions 123 ascribable to a centrifugal force applied to the permanent magnets 130 and a wind pressure ascribable to the rotation of the rotor.

In the embedded magnet rotor 100 according to this embodiment, with its conventional shape left as it is, the connection portions 125 are provided at the portions in the fan-shaped portion end regions 123a of at least the electromagnetic steel sheets 120a in the end plate neighboring regions 120n. This makes it possible to prevent the deformation of the end portions of the electromagnetic steel sheets forming the rotor core.

### [Second Embodiment]

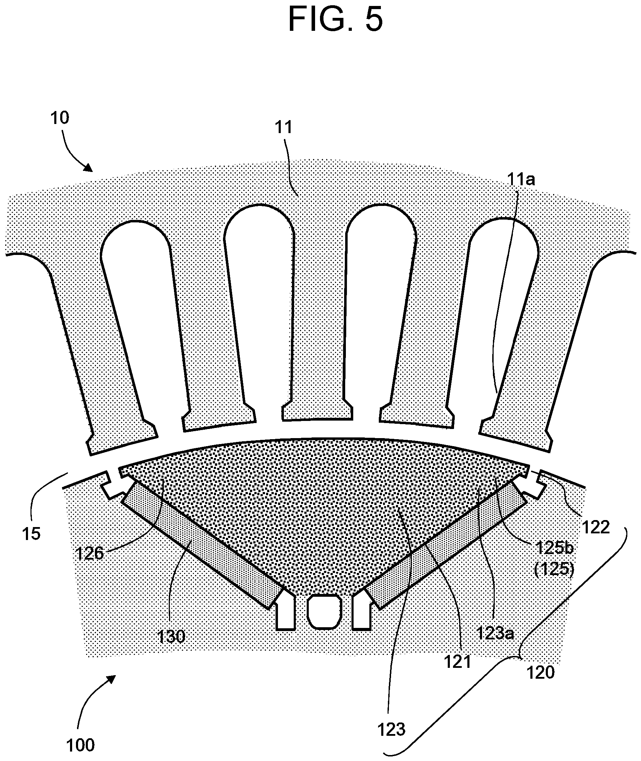

FIG. 5 is a partial cross-sectional view illustrating the structure of an inter-pole portion of an embedded magnet rotor according to a second embodiment.

This embodiment is a modification of the first embodiment. In this embodiment, the connection portions 125 are connection portions 125 formed by the electromagnetic steel sheets 120a bonded to each other at their fan-shaped portions 123. The connection portions 125b are formed in at least the electromagnetic steel sheets 120a in the end plate neighboring regions 120n.

FIG. 5 shows, as an example, the case where the bonded ranges are the entire fan-shaped portions 123, but this is not restrictive. In the electromagnetic steel sheets 120a, the bonded ranges only need to be in portions on a more outer side than the outer peripheries of the end plates 140.

In the embedded magnet rotor 100 according to this embodiment, only by applying an adhesive, it is possible to form the connection portions 125 without working the electromagnetic steel sheets 120a and achieve the same effect as that of the first embodiment.

### [Third Embodiment]

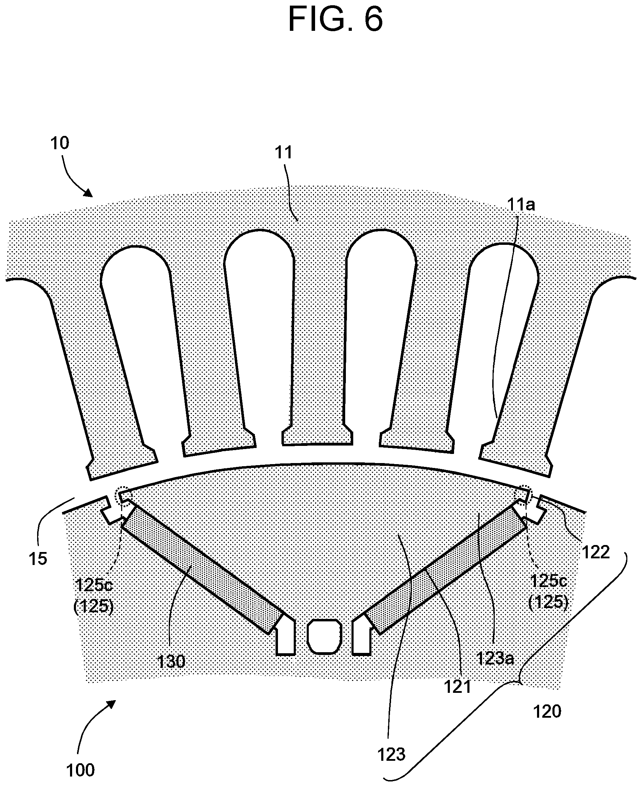

FIG. 6 is a partial cross-sectional view illustrating the structure of an inter-pole portion of an embedded magnet rotor 100 according to a third embodiment.

This embodiment is a modification of the first embodiment. In this embodiment, the connection portions 125 are welded portions 125c. In at least the electromagnetic steel sheets 120a in the end plate neighboring regions 120n, the welded portions 125c are formed at end portions of the fan-shaped portion end regions 123a as indicated by the broken-line ellipses in FIG. 6. The welded portions 125c may be formed by spot welding at one place or a plurality of places.

In the embedded magnet rotor 100 according to this embodiment, only by spot-welding the electromagnetic steel sheets 120a, it is possible to form the connection portions 125 and achieve the same effect as that of the first embodiment.

### [Fourth Embodiment]

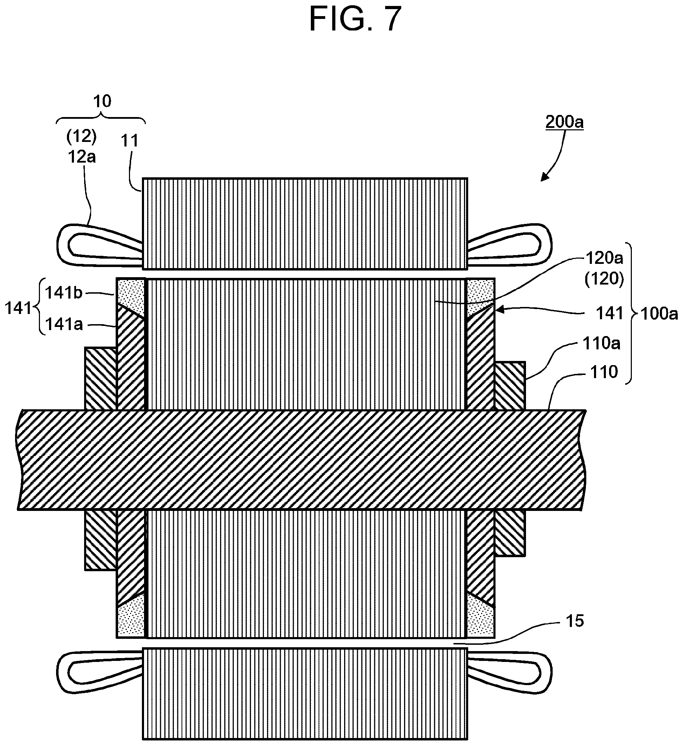

FIG. 7 is a cross-sectional view illustrating the structure of a rotary electric machine 200a according to a fourth embodiment. This embodiment is a modification of the first embodiment.

The first to third embodiments describe the case where the end plates 140 are smaller in outside diameter than the rotor core 120 and the connection portions 125 are provided in the plurality of electromagnetic steel sheets 120a in the end plate neighboring regions 120n.

On the other hand, in an embedded magnet rotor 100a of the rotary electric machine 200a according to this embodiment, end plates 141 are substantially equal in outside diameter to the rotor core 120. Here, "substantially equal" means "equal within a range of errors including a production error, a measurement error, and so on".

The end plates 141 each have a nonmagnetic portion 141a and an annular insulator portion 141b disposed on the radially outer side of the nonmagnetic portion 141a. The annular insulator portion 141b here is an insulator, for example, a resin or a carbon compound such as silicon carbide.

Contact surfaces between the nonmagnetic portions 141a and the annular insulator portions 141b are tapered surfaces so that a fastening force at the nonmagnetic portions 141a is transmitted to the annular insulator portions 141b. As they go from the outer side toward the inner side (rotor core 120 side) of the end plates 141 in terms of the rotation axis direction, the tapered surfaces are on a more radially inner side from the radially outer side, in other words, become smaller in diameter. The nonmagnetic portions 141a and the annular insulator portions 141b may be bonded to each other by an adhesive or the like.

As described above, in the embedded magnet rotor 100a according to this embodiment, by using the end plates 141, it is possible to use conventional electromagnetic steel sheets 120a as they are and achieve the same effect as that of the first embodiment.

According to the embodiments described above, it is possible to provide the embedded magnet rotor and the rotary electric machine in which the deformation of the end portions of the electromagnetic steel sheets forming the rotor core is prevented.

### [Other Embodiments]

While embodiment of the present invention has been described, the embodiment has been presented by way of example only, and is not intended to limit the scope of the invention. Features of the embodiment may be used in combination. Furthermore, the embodiment may be embodied in other various forms. Various omissions, replacements and changes may be made without departing from the spirit of the invention. The embodiment and variants thereof are within the scope and spirit of the invention, and are similarly within the scope of the invention defined in the appended claims and the range of equivalency thereof.

### EXPLANATION OF REFERENCE NUMERALS

10: stator, 11: stator core, 11a: stator teeth, 12: stator winding, 12a: coil end portion, 15: gap space, 100: embedded magnet rotor, 110: rotor shaft, 110a: shaft collar, 110h: rotor shaft through hole, 120: rotor core, 120a: electromagnetic steel sheet, 120n: end plate neighboring region, 121: permanent magnet housing hole, 122: communication opening 123: fan-shaped portion, 123a: fan-shaped portion end region, 123b: entire fan-shaped portion, 123f: fan-shaped portion, 125: connection portion, 125a: caulked portion, 125b: connection portion, 125c: welded portion, 130: permanent magnet, 140: end plate, 141: end plate, 141a: nonmagnetic portion, 141b: annular insulator portion, 200: rotary electric machine

## Claims

1. An embedded magnet rotor comprising:
a rotor shaft extending in a rotation axis direction;
a rotor core having a plurality of electromagnetic steel sheets laminated in the rotation axis direction attached to a radially outer side of the rotor shaft, the rotor core having two permanent magnet housing holes that are formed in a radially outer portion of the rotor core and are arranged in a V-shape across each d axis with an interval in a circumferential direction;
plate-shaped permanent magnets respectively housed in the permanent magnet housing holes; and
two end plates smaller in outside diameter than the rotor core and arranged at ends of the plurality of electromagnetic steel sheets in terms of the rotation axis direction to prevent the permanent magnets from protruding outward in terms of the rotation axis direction,
wherein the permanent magnet housing holes communicate with an outer side of an outer peripheral surface of the rotor core, and
wherein the plurality of electromagnetic steel sheets in regions near the end plates in terms of the rotation axis direction of the rotor core have connection portions for connecting the electromagnetic steel sheets.

2. The embedded magnet rotor according to claim 1, wherein the two end plates are larger in outside diameter than a radially outermost envelope cylinder of the permanent magnets housed in the rotor core.

3. The embedded magnet rotor according to claim 1 or 2, wherein the connection portions are caulked portions formed in radial and circumferential end portions of the plurality of electromagnetic steel sheets in the regions near the end plates.

4. The embedded magnet rotor according to claim 1 or 2, wherein the connection portions are welded portions formed in radial and circumferential end portions of the plurality of electromagnetic steel sheets in the regions near the end plates.

5. The embedded magnet rotor according to claim 1 or claim 2, wherein the connection portions are bonded portions formed in at least radial and circumferential end portions of the plurality of electromagnetic steel sheets in the regions near the end plates.

6. An embedded magnet rotor comprising:
a rotor shaft extending in a rotation axis direction;
a rotor core having a plurality of electromagnetic steel sheets laminated in the rotation axis direction attached to a radially outer side of the rotor shaft, the rotor core having two permanent magnet housing holes that are formed in a radially outer portion of the rotor core and are arranged in a V-shape across each d axis with an interval in a circumferential direction;
plate-shaped permanent magnets housed respectively in the permanent magnet housing holes; and
two end plates substantially equal in outside diameter to the rotor core and each having an annular insulator portion in a radially outer portion of the end plates.

7. A rotary electric machine comprising:
the embedded magnet rotor according to any one of claim 1 to claim 6; and
a stator disposed on a radially outer side of the rotor core.
